# EUROPEAN PATENT SPECIFICATION

(11) **EP 2 522 789 B1**
(45) Date of publication and mention of the grant of the patent: **12.04.2017**
(21) Application number: 11005692.6
(22) Date of filing: 13.07.2011
(51) Int. Cl.: E04D 3/35, E04D 13/16

(54) **Insulation roof board and method of production and packaging thereof**
Isolierende Dachschale und Verfahren zu deren Herstellung und Verpackung
Plaque de toiture d'isolation et procédé de production et emballage correspondant

(30) Priority: 13.05.2011 PL 39477811
(43) Date of publication of application: 14.11.2012
(73) Proprietor: Werner Janikowo Sp. z o.o., 66-400 Gorzów Wielkopolski (PL)
(72) Inventor: Wisniewski, Tomasz, 95-054 Ksawerów (PL)
(74) Representative: Klassek, Maciej Adam

(56) References cited:
- EP-A1- 2 206 849
- EP-A2- 1 655 421
- DE-A1- 2 431 665
- DE-U1- 29 510 510

## Description

The present invention refers to the insulation roof board and the method of production and packaging thereof.

There is known a rectangular roof board making an element of the roofing that can be rolled and that is composed of a thermal insulation layer and a single tar paper layer adhering thereto, wherein the thermal insulation layer is made of mineral wool, glass wool, or foamed plastic. A tar paper layer adheres to the upper surface of the thermal insulation layer, said adhesive laid on the surface of the thermal insulation board in the form of a continuous layer over the entire adhesion surface or in the form of different strips or fragments in some areas on the board surface. Tar paper is glued in such a way that it extends beyond two tangential edges of the thermal insulation board, thus forming the protrusions, and on the two other sides it ends exactly as the board ends. The protrusions are perpendicular to each other and enable overlapping with a neighboring element.

There is also known a roofing element composed of a thermal insulation layer made of foamed polystyrene and a single layer of surface tar paper glued thereon. This known element may be for example composed of two thermal insulation boards adjacent to each other and connected by a single layer of surface tar paper glued to them. The element can be folded in the middle so that after folding the surface tar papers is bent over the half of its length and one tar paper layer adheres to the other, and the thermal insulation layers overlap. Surface tar paper is glued to the upper surface of the thermal insulation board or boards with glue, in such a way that it extends beyond the two tangential sides making the protrusions, and it the two other sides it ends exactly as the board ends. The protrusions are perpendicular relative to each other and enable overlapping with a neighboring element.

After the roofing of such known elements is put on the roof, in order to ensure waterproof properties, the upper surface of the surface tar paper is covered with an additional coating which makes it resistant to the weather conditions. One obtains this coating by applying liquid paint to the tar paper with paint brushes or rollers.

There is known from the GB patent the structure of the element for roof covering in the form of a thermal insulation board with the upper surface covered with the adhesive material. The adhesive material is covered with the anti-adhesive material layer which protects the adhesive. Such protection is advantageous for transport or storage of such elements. After known elements are laid on the roof, anti-adhesive material layer is removed, and one or several waterproof layers made of fibrous sheet and bitumen are laid on the upper surface of the adhesive material. In this case, the adhesive material layer, characterized by strong self-adhesion properties, is only a base for mounting the proper waterproof layers, yet is not a waterproof layer itself.

There is known from the British patent application GB 1422 945 A the roof covering board composed of the thermal insulating board, the upper surface of which is covered with bitumen. After such boards are laid on the roof, in order to obtain the cover tight enough, at least a single waterproof layer is laid on the bitumen layer, in the form of tar paper or other materials. In this case the bitumen layer characterized by good adhesive properties is only the substrate for mounting the proper waterproof layers. The bitumen layer itself does not constitute waterproof insulation. What is inconvenient while covering the roof with this type of a known board is that it is necessary to seal the lateral connections between thermal insulating boards using different sealants, and only afterwards the thermal insulation layer can be laid.

There is known from the German patent application DE 2431665 A1 the multi-layered roof board, which is composed of hard plastic foam covered with the tar paper layer and plastic foil. The board is either rectangular or strip-shaped. From the bottom there are vertical cuts in the foam layer, which make it possible to roll the board, especially if it has the form of a long strip. In the upper part of the foam, there are fusion ducts which prevent the formation of steam bubbles directly underneath the tar paper layer. Vertical cuts and fusion ducts are made in such a way that they are parallel to the shorter side of the element and therefore perpendicular to the longer side. A layer of tar paper is glued to the upper surface of the hard foam layer. The tar paper layer ends exactly with the foam layer at one or two tangential sides, and it extends beyond the foam edges on the other sides. There is an additional self-adhesive layer glued to the bottom surface of the tar paper extending beyond the foam. On the opposite side of the element, on the upper surface of the tar paper, there is an additional self-adhesive layer. Additional self-adhesive layers make it possible to glue together the neighboring tar paper layers. The layers are glued together using hot air blown by the heater. For the method of making the roofing using this known multi-layered structure, short boards have such a design that the tar paper extends on both sides, whereas in long boards reaching from one end of the roof to the other, the tar paper extends on one side only. Some fragments of the tar paper extend beyond the outline of the hard foam layer so that it is possible to make the lap connection with the neighboring board. There is a bituminous layer laid on the upper exposed surface of the tar paper, which makes the entire board resistant to the impact of the weather conditions. Covering plastic foil is laid on the bituminous layer, which is glued together with the other board layers using the bituminous layer. The covering foil is laid in such a way that it extends slightly beyond the extending tar paper, and on the other sides, where the roof cover ends exactly as the foam ends, the foil is displaced inwards by the length of the tar paper protrusion. These boards are reeled and transported to the reloading area or to the construction site. To make the roof tight, the foil layers of the neighboring boards are joined with each other by preheating the foil until it melts and pressing it against the respective fragments of the exposed side of the neighboring boards. Such design of the roof board requires a safety clearance between the welding places between covering foil and/or adhesive tar paper layer on the one hand, and hard foam on the other side. The safety clearance secures hard foam against damage due to high temperature while welding the tar paper layer and the covering foil layer. The board according to this solution has the form of the hard foam layer with vertical cuts in the bottom, making it possible to reel the board, and in its upper part there are the infusion ducts which secure it against the formation of steam bubbles.

There is known from the Polish patent description no. 184727 a method of producing thermal insulation boards intended especially for roofing, said boards composed of three layers, wherein one layer is a polystyrene foam board, another one is asphalt tar paper and the third one is an adhesive, wherein the polystyrene foam board is covered with two types of adhesive, polyurethane and synthetic quick-drying one, wherein the quick-drying one is applied on the board to the surface smaller than 5% of the board surface, and then on the board prepared this way the band of asphalt tar paper is pressed against, of the thickness slightly larger than the board's width, wherein the band of the tar paper is slit in such a way that the length of tar paper strips is slightly greater than the length of the board.

From the European patent application EP2 206 849 A1 a multi-layered roofing module is known, which consists of thermal and water insulation layers, and the upper plate of the thermal insulation board, in particular of a polystyrene foam board or/and a mineral wool board or/and different types of wool and foam, which is covered evenly with a layer of bituminous mass on which there is put a water insulation covering layer, in the form of underlay tar paper, which is joined with the thermal insulation board by means of press rollers, then on the water insulation covering layer, in the form of underlay tar paper, there is put evenly a layer of bituminous mass on which the second water insulation layer is put, in the form of underlay tar paper, all that is joined by means of press rollers, then on the layer of the underlay tar paper there is put a layer of bituminous mass on which the third water insulation layer is put, in particular weldable tar paper of outer covering, and all that is joined by means of press rollers creating a multi-layered roofing module. The water insulation covering layer is wider and longer than the thermal insulation board. Subsequent water insulation layers are joined with each other with an appropriate shift so that they create a system of overlaps. The multi-layered roofing module may consist only of two water insulation layers in the form of the water insulation covering layer (2), and water insulation layer, in particular in the form of weldable tar paper of outer covering. Making roofing out of the multi-layered roofing modules fastened to the base by means of mechanical fasteners or/and adhesives allowed to be used in the building industry, involves putting the multi-layered roofing modules on the roof surface in such a way that the multi-layered roofing modules with a system of overlaps joined with the system of overlaps of the other multi-layered roofing modules overlap creating a tight lock and a tight roofing surface. The overlaps are joined by means of welding them, in particular by applying high temperature.

Making the roofing using known boards does not allow one to achieve the complete roofing that would at the same time have thermal insulation and waterproof properties. Known boards, to ensure complete waterproof properties, require that additional layers be used. These boards are composed of different materials and do not make it possible to obtain the homogenous waterproof coating. Joining waterproof layers together requires the use of additional adhesives such as glues or bituminous layers, their application and spreading, as well as sealing of the lines connecting neighboring elements. Due to the significant stiffness of the complex waterproof layer, lap joints of the particular elements are more difficult. To make the roofing using the known roof boards, it is required to cut the boards to size and make laps, which results in generation of much waste, as well as to align the boards in a cautious way, which also requires that top class professionals be hired and specialist tools be used.

Known boards, characterized by relatively stiff extending edges of particular layers have often been exposed to damage due to packaging and transport. Securing the known boards for transport and storage has required the use of special pads and spacers, which has not always guaranteed the desired result and has been connected with additional material and labor costs. Additional materials used for securing the boards, after the known boards have been utilized, have generated environmentally unfriendly waste and have had to be disposed of in a costly manner.

The roof board according to the invention has all the features of claim 1 and thus has a thermal insulation layer in the form of a cuboid, the upper surface of which has at least two tar paper layers glued thereon, joined together in part of the contact area, wherein each tar paper layer has a carrying insert, a bottom coating and an upper coating in the form of a bituminous mass, and the exposed surface of the upper surface is finished with grit. The tar paper sheets are connected with the thermal insulation layer in such a way that two tangential perpendicular sides of the sheets of the protective tar paper layer are aligned with the surface of the sides of the cuboidal thermal insulation layer, and each following tar paper sheet is displaced to the same side in both perpendicular directions against the previous sheet, wherein the tar paper sheets with contact between each other are connected in such a way that along the outer sides of each sheet there is a strip overlapping with the thermal insulation board, which from the bottom is covered with the foil made of meltable plastic material in the area where the tar paper parts in contact are not joined.

Favorable usability parameters are especially typical of the thermal insulation layer made of mineral wool or/and glass wool, for which compression stresses for 10% of compression distortion are in the range from 75 to 120 kPa, and/or polyisocyanourane and/or polyurethane foam, where compression stresses for 10% compression distortion range from 100 to 180 kPa.

The bottom surface of the thermal insulation layer can be provided with a system of linear grooves, which, advantageously, intersect. The grooves, after the layer is laid on the roof surface, make a useful ventilation system.

Especially favorable waterproof properties are demonstrated by the roof board according to the invention, where the waterproof layer contains the following:
- protective tar paper layer, joined directly with the thermal insulation layer with the carrying insert made of glass fiber sheet of a grammage of the insert from 50 to 100 g/m², covered on both sides with the **bituminous mass** layer containing the bitumen mixture characterized by a penetration of 25 to 50 1/10mm at 25 °C and a softening temperature of 80 to 110 °C, and a filler, advantageously in the form of limestone powder of a grain size lower than 1 mm and CaCO₃ content of at least 85 %, basalt powder of absorbability below 1.5 % m/m, dolomite powder of moisture content below 0.3%, wherein the amount of a filler is equal to or greater than bitumen content, advantageously from 50-75 % of the total mix, and on the bottom there is a coat of meltable plastic foil, advantageously made of polyethylene and/or polypropylene, of a density ranging from 0.90 to 0.97 gr/cm³, and from the top there is fine grit layer (fine sand) of a grain size from 0.5 to 1.0 mm or talc of a grain size below 50 µm, and
- substrate tar paper layer, containing a carrying insert in the form of polyester fiber sheet of a grammage of 120 to 250 gram per 1 m² or glass fabric of a grammage of 150 to 200 g/m² or glass blanket of a grammage of 100 to 160 g/m² or combination thereof, and a bituminous mass layer, containing the bitumen mixture of a penetration at 25 °C from 160 to 220 1/10mm and a softening temperature from 30 to 50 °C, a modifier in the form of synthetic rubber in the amount of 3 to 12 % as recalculated against bitumen or polypropylene mass in the amount of 6 to 10 % recalculated against bitumen mass and a filler, advantageously in the form of limestone powder of a grain size below 1 mm and CaCO₃ content of at least 85 %, basalt powder of absorbability below 1.5 % m/m, dolomite powder of moisture content below 0.3 % m/m, advantageously from 55 to 70 % of the total mix or a bituminous mass layer containing the bitumen mixture of penetration at 25 °C ranging from 25 to 50 1/10mm and a softening temperature from 80 to 110 °C and a filler, advantageously in the form of limestone powder of a grain size lower than 1 mm and CaCO₃ content of at least 85 %, basalt powder of absorbability below 1.5 % m/m, dolomite powder of moisture content below 0.3%, wherein the amount of a filler is equal to or greater than bitumen content, advantageously from 50-75 % of the total mix, and on the bottom there is a coat of meltable plastic foil, advantageously made of polyethylene and/or polypropylene, of a density ranging from 0.90 to 0.97 gr/cm³, and from the top there is a fine grit layer (fine sand) of a grain size from 0.5 to 1.0 mm or talc of a grain size below 50 µm, and
- surface tar paper layer, in the form of polyester fiber sheet of a grammage of 120 to 300 gram per 1 m² or glass fabric of a grammage of 150 to 200 g/m² or glass blanket of a grammage of 100 to 160 g/m² or combination thereof, and a bituminous mass layer, containing the bitumen mixture of penetration at 25 °C from 160 to 220 1/10mm and a softening temperature from 30 to 50 °C, a modifier in the form of synthetic rubber in the amount of 3 to 12 % as recalculated against bitumen or polypropylene mass, or atactic polypropylene in the amount of 6 to 10 % and a filler, advantageously in the form of limestone powder of a grain size below 1 mm and CaCO₃ content of at least 85 % and/or basalt powder of absorbability below 1.5 % m/m, and/or dolomite powder of moisture content below 0,3 % m/m, or another filler, wherein the total filler content is from 55 to 70 % of the mix, and on the bottom there is a coating made of **meltable plastic foil,** advantageously made of polyethylene or polypropylene foil of a density ranging from 0.90 to 0.97 gr/cm³ , and on the top there is a rough-grain grit chlorite-sericite layer, of a grain size from 0,5 to 4,0 mm.

In another advantageous version of the invention, the roof board has the following:
- protective tar paper layer containing a carrying insert made of glass blanket of a grammage of 50 to 100 g/m², a bituminous mass layer with bitumen of penetration at 25 °C from 25 to 50 1/10mm and a softening temperature from 80 to 110 °C, a filler, advantageously in the form of limestone powder of a grain size below 1 mm and CaCO₃ content of at least 85 % and/or basalt powder of absorbability lower than 1.5 % m/m and/or dolomite powder of moisture content below 0.3 % m/m, wherein the filler content ranges from 50 to 75 % of the total mix, and on the bottom there is a coating of meltable plastic foil, advantageously polyethylene and/or polypropylene of a density from 0.90 to 0.97 gr/cm³, and its upper surface is covered with **fine grit** of fine sand of a grain size from 0.5 to 1.0 mm or talc of a grain size below 50 µm, and
- surface and substrate tar paper layer, containing a carrying insert in the form of polyester fiber sheet of a grammage of 120 to 300 g/ m² or composites of polyester fiber sheet and fibrous glass material, bituminous mass layer with bitumen mix layer of a penetration at 25 °C from 160 to 220 1/10 mm and a softening temperature of 30 to 50 °C, a modifier in the form of synthetic rubber in the amount of 3 to 12 % or atactic polypropylene in the amount of 6 to 10 % and a filler in the amount of 55 to 70 % of the total mix, advantageously in the form of limestone powder of a grain size below 1 mm and CaCO₃ content of at least 85 % and/or basalt powder of absorbability below 1.5 % m/m and/or dolomite powder of moisture content below 0.3 % m/m, which from the bottom has the coating of meltable plastic foil, advantageously polyethylene foil, polypropylene foil, of density ranging from 0.90 to 0.97 gr/cm², and which on the upper side is covered with rough grit made of ground basalt or chlorite-sericite, advantageously of a grain size from 0.5 to 4.0 mm.

Use of carrying layers made of polyester fiber sheet or glass fiber sheet in the design of the board according to the invention improves the durability and useful life of the roofing made of these elements. Arranging a number of insulation roof boards according to the invention next to each other, and connecting them properly, makes it possible to have proper roofing at once, which at the same time performs the thermal insulation and waterproof function. The design of the board imposes the specific method of arranging elements against each other on the roof, the method of mounting the elements on the roof and the method of connecting the neighboring elements.

Use of the insulation roof board according to the invention reduces significantly the time required to make the roofing and simplifies largely the roofing works, as well as eliminates mistakes in the process. Making the roofing using the new roof element does not require the labor by specialized professionals, or use of additional adhesives, or additional sealing in between the neighboring elements.

The insulation roof board according to the invention is an element of the complete roofing, and at the same time ensures thermal insulation and waterproof function, without a need to apply additional waterproof layers. The use of this board reduces the roofing costs in a significant way, lets one save energy and does not lead to generation of waste.

The present invention refers also to the method of production of the insulation roof board as defined in any of claims 1 to 5. In the method according to the invention, a rectangular sheet is cut out from the surface tar paper with its exposed side down, said rectangle having the sides larger than the sides of the cuboidal thermal insulation layer, and then the sheet is heated from the top in zones, over non-entire width and length until the protective foil melts and the bituminous layer achieves adhesive properties on the preheated surface, and on the two perpendicular tangential sides the unaffected strips are left, and then another rectangular sheet of tar paper, with the sides larger than the sides of the cuboidal insulation layer, is laid thereon and pressed until the connection is fixed. The operation involving the preheating of the zones, application and pressing is repeated until the required number of layers is achieved, and tar paper sheets are joined in such a way that each subsequent tar paper sheet is displaced to the same side in both perpendicular directions against the previous sheet, wherein along the outer sides of each sheet a strip is formed, where the tangential tar paper is not connected. Then, the bottom surface of the last outer tar paper sheet is preheated from the top in zones, over incomplete width and length until the protective foil melts and until the bituminous layer achieves the adhesive properties on the preheated surface which is smaller than the surface of the rectangular thermal insulation layer, and on the two perpendicular tangential sides lateral unaffected strips are left, and then an adhesive is applied to the thus prepared part of the surface of the top sheet, and then the rectangular thermal insulation layer is applied and aligned to the two tangential perpendicular sides of the top tar paper sheet limiting the adhesive-covered surface, and pressed until the connection is fixed.

Insulation roof boards produced by the method according to the invention show specific waterproof properties when using a bituminous adhesive of a softening temperature from 150 to 170 °C or a cold-applied polyurethane adhesive. In case the ultimate tar paper layer has a fine grit layer on its bottom, in the form of fine sand or talc, the preheating in zones is not used before adhesive application.

In the method according to the invention, the preheating with a series of gas or oil torches is used, said torches arranged crosswise relative to the tar paper length, and advantageously, the vertical and horizontal movement of the torches can be controlled, or the preheating is realized by hot air jet blowing.

The method according to the invention can be conducted periodically, using pre-cut sheets, or continuously, using tar paper in reels, which after cutting are transported on rollers.

The present invention refers also to the method of packaging the insulation roof boards according to the invention.

The packaging method according to the invention involves the piling of finished roof boards with thermal insulation layer up, and the subsequent boards are alternately arranged with their corners of protruding tar paper in opposite directions, and with the corners aligned to the sides of the thermal insulation layer of the preceding board. The method is realized in an advantageous way using horizontal transport line, especially using the rollers, on which finished insulation boards with their thermal insulation face up and with protruding corners of the tar paper layers facing the same side and arranged in the same direction are supplied to the turn table characterized by rotary and return motion, wherein each cycle of piling a single insulation board, before the next insulation board is laid, involves the rotation of the table by half and the lowering of the table by the distance equal to the height of the insulation roof board. Advantageously, the first insulation board of the pile is laid on the transport layer. In order to have the formed pile compact and durable it is wrapped in plastic foil.

The present invention is shown in embodiments in the enclosed drawing, where:

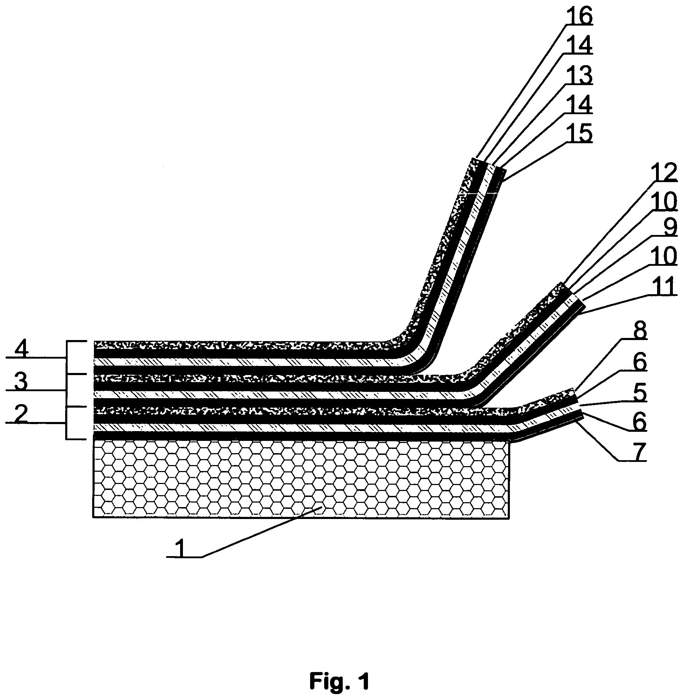

Fig. 1 shows the cross-section at the edge of the insulation roof board in an embodiment covering the roofing with three layers of tar paper,

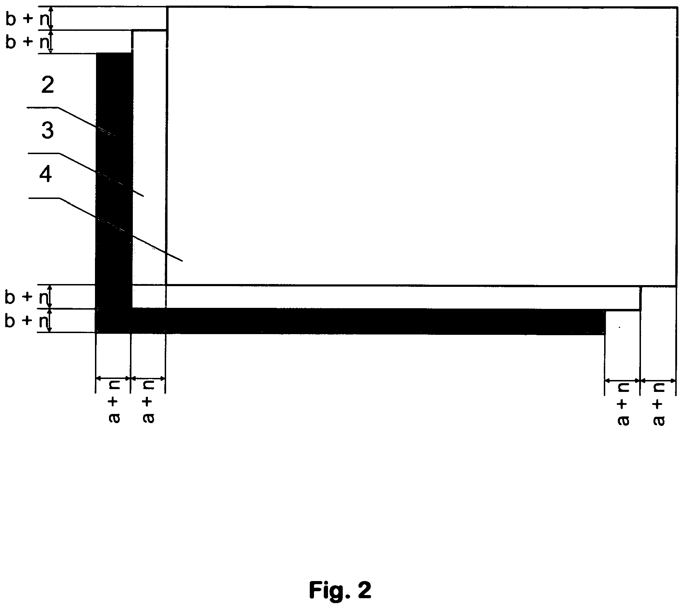

Fig. 2 shows the top view of the insulation roof board

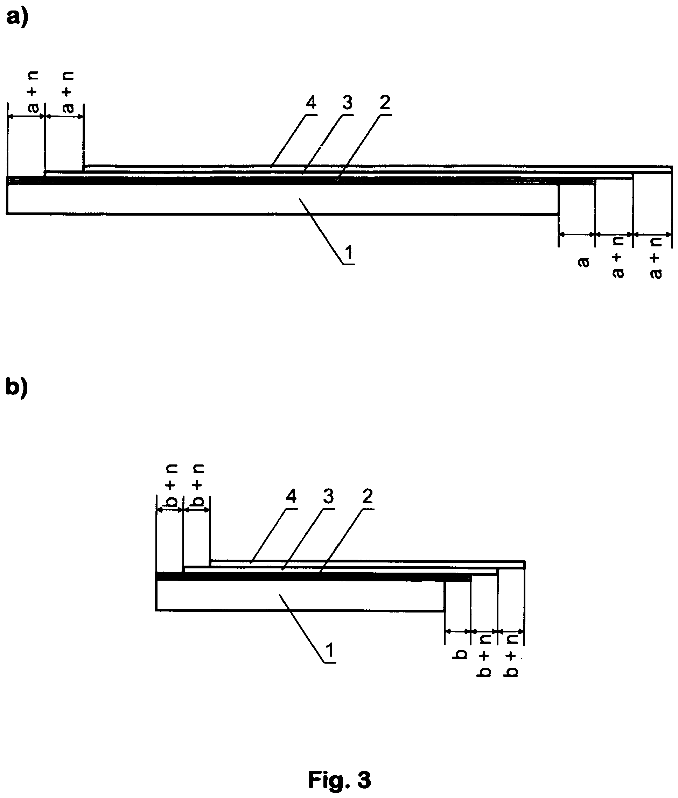

Fig. 3. shows the a) longer side view / b) shorter side view of the insulation roof board,

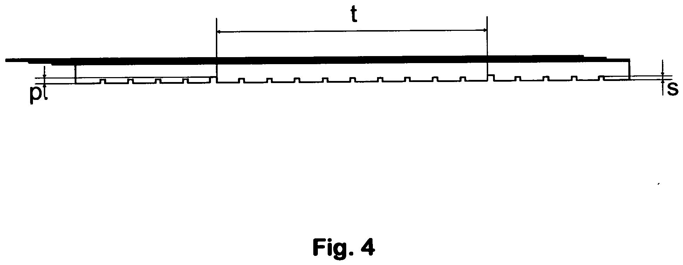

Fig. 4 shows the side view of the roof board with grooves on the outer side of the thermal insulation layer.

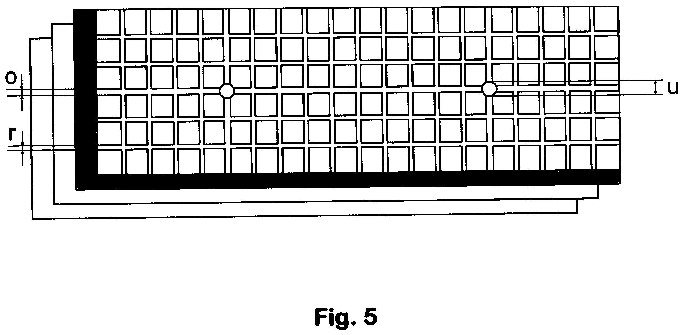

Fig. 5 shows the bottom view of the roof board with grooves on the outer side of the thermal insulation layer.

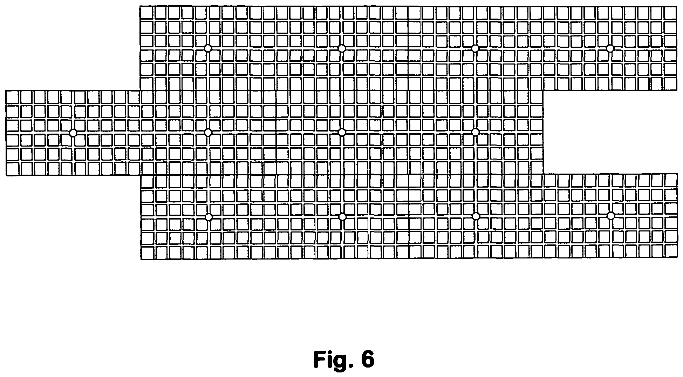

Fig. 6 shows the system of ventilation ducts on the bottom surface of the roofing made of insulation boards according to the invention

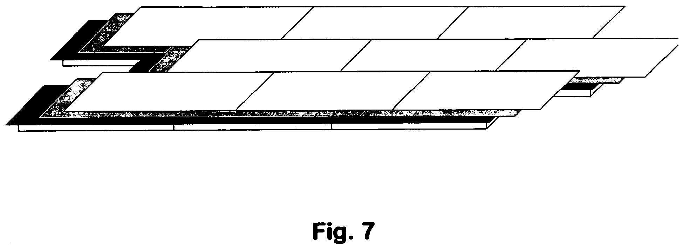

Fig. 7 shows part of the roofing made of insulation board according to the invention,

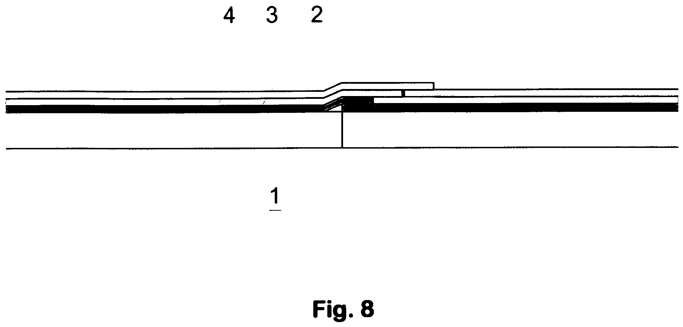

Fig. 8 shows the connection between two neighboring boards according to the invention

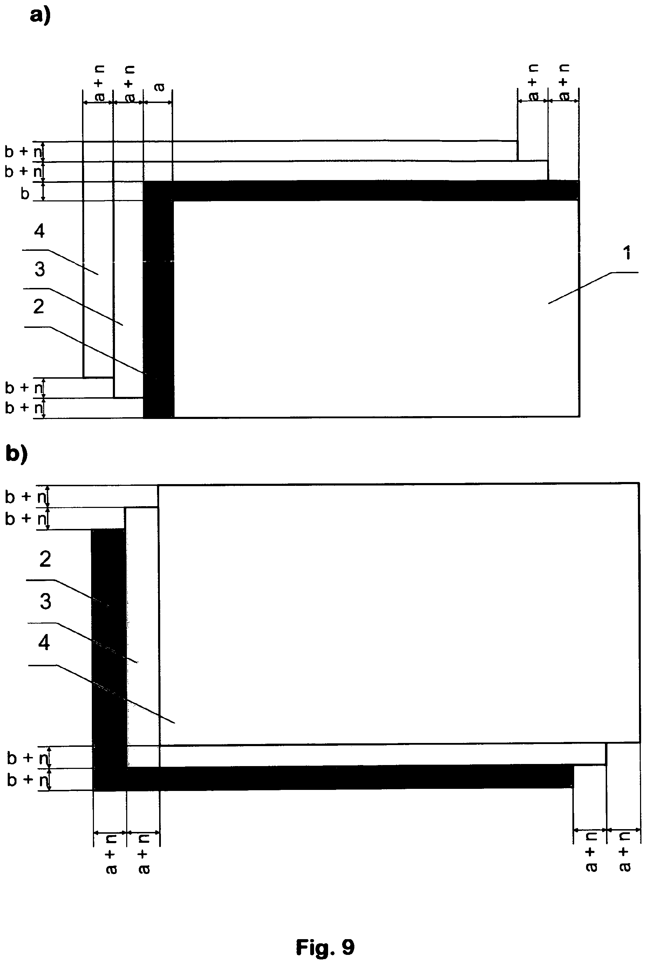

Fig. 9 shows the **a)** bottom view and **b)** top view of the board with indication of contact areas and connections between particular layers of the insulation roof board.

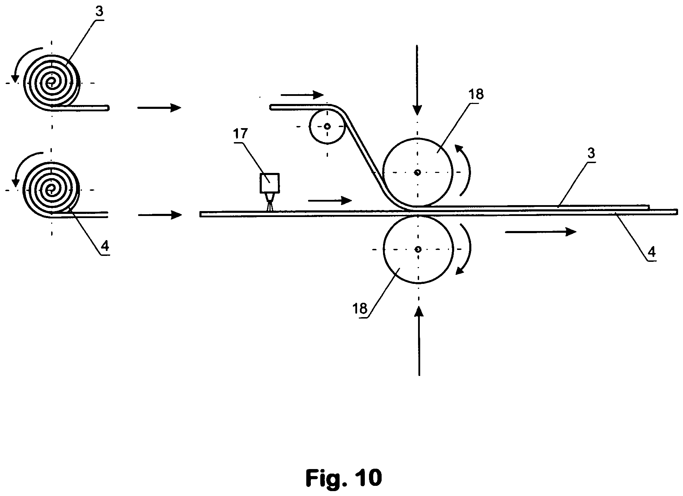

Fig. 10 shows the operation of connecting two first tar paper layers making the waterproof layer of the board according to the invention,

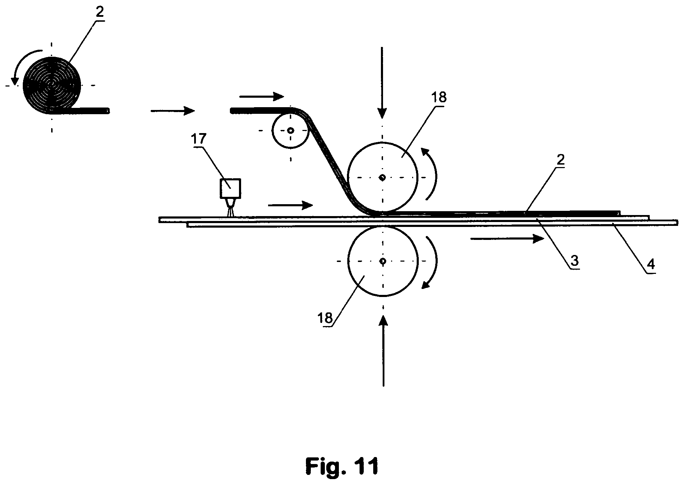

Fig. 11 shows the waterproof layer of the board composed of three tar paper layers at the moment of applying the final tar paper layer

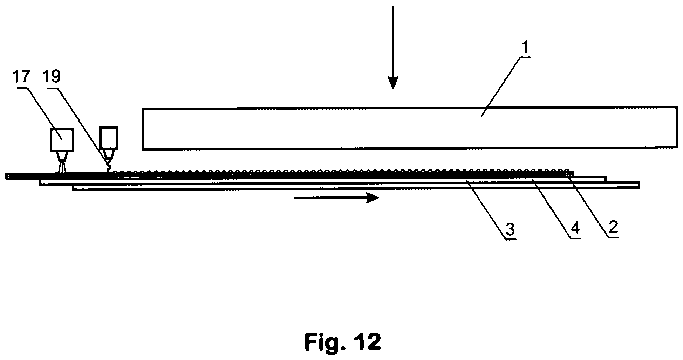

Fig. 12 shows the phase of applying the adhesive and joining the thermal insulation layer with the waterproof layer,

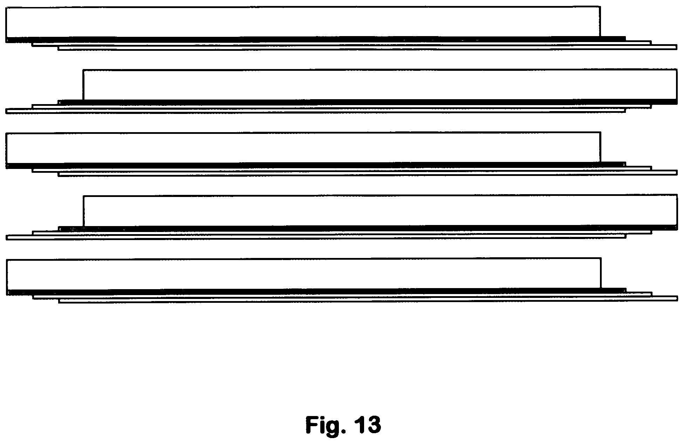

Fig. 13 shows separately the arrangement of the insulation roof boards according to the invention, in a pile obtained by the packaging method according to the invention

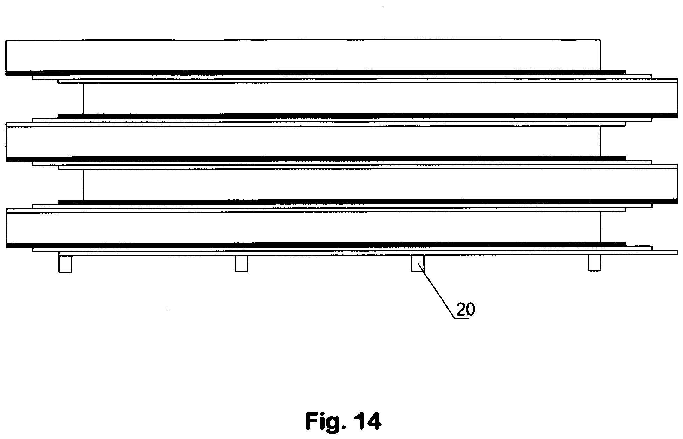

Fig. 14 shows the pile of finished insulation roof boards formed by the packaging method according to the invention.

In the design of the insulation roof board according to the invention, the thermal insulation layer **1̅** is made of stiff polyurethane foam, where compression stresses at 10% compression deformation range from 130 to 150 kPa.

The waterproof layer comprises three layers of tar paper **2,3,4.**

The protective tar paper layer **2** is joined directly with the thermal insulation layer **1** and contains the carrying insert **5** of glass fiber blanket of a grammage from 80 g/m², covered on both sides with a layer of bituminous mass **6,** containing bitumen mix of penetration of 30-40 1/10mm at 25 °C and a softening temperature of 85 °C, and a filler in the form of a mix of limestone powder of a grain size below 1 mm and CaCO₃ content of 90%, basalt powder of absorbability below 1.0 % m/m; dolomite powder of moisture content of 0.2 %, wherein the filler amount is 65 % of the total mix. The protective tar paper layer **2** is coated from the bottom with polyethylene foil **7** of a density of 0.92 gr/cm³, and from the top its surface is covered with fine grit **8** of fine sand of a grain size from 0.5 to 1.0 mm.

The substrate layer of tar paper **3** contains the carrying insert **9** of glass fabric, of a grammage from 180 g/m² and a bituminous mass layer **10**, containing the mixture of bitumen of a penetration at 25 °C of 180-200 1/10mm and a softening temperature of 40 °C, a modifier in the form of synthetic rubber in the amount of 7 % as recalculated against bitumen mass and a filler in the amount of 65 % in the form of basalt powder of absorbability below 1.5 % m/m. The substrate layer is secured from the bottom with the coating of polypropylene foil **11** of a density from 0.95 gr/cm³, and it has a fine grit **12** layer made of talc on its upper surface, of a grain size below 50 µm.

The third surface tar paper layer **4** has **the carrying insert 13** made of polyester fiber sheet of a grammage from 280 g/m² and glass fabric of a grammage of 180 g/m², a **bituminous mass layer 14**, containing a mixture of bitumen of a penetration at 25 °C from 200 to 220 1/10mm and a softening temperature from 50 °C, a modifier in the form of atactic polypropylene in the amount of 8% and a filler in the form of basalt powder of absorbability below 1.5 % m/m and dolomite powder of moisture content of 0.2 % m/m, wherein the total filler content is 55% of the mix. The third layer of tar paper **4** is coated from the bottom with polypropylene foil **15** of a density of 92 gr/cm³, and its top face is covered with rough grit layer of basalt-chlorite-sericite **16** of a grain size from 0,5 to 4,0 mm.

The top face of the thermal insulation board **1** is joined with the protective tar paper layer **2** in such a way that the two perpendicular edges of the first tar paper layer **2** overlap with the edges of the thermal insulation board **1,** and the two other edges of tar paper **2** extend beyond the edges of the thermal insulation board **1** and the distance **a** on the longer side and the distance **b** on the shorter side. Another substrate tar paper layer **3** is shifted against the protective tar paper layer **2** by the distance **a**+**n** on the longer side and the distance **b**+**n** on the shorter side. The third, surface tar paper layer **4** is displaced against the third tar paper layer by the distance **a+n** on the longer side and the distance **b+n** on the shorter side. The distances **a** and **b** are larger for the substrate and surface tar paper layer by the "**n**" section in order to compensate for the production inaccuracies.
All the tar paper layers **2, 3, 4** have the same length **c** and the same width **d**.

In the embodiment of the insulation roof board with two tar paper layers, the position of the thermal insulation board **1** against the first and the second tar paper layer **2, 3** and the displacement lengths **a**, **b, c**, **d** are identical as for the board with the waterproof layer composed of three tar paper layers **2, 3, 4**.

The displacements of the tar paper layers **2, 3, 4** relative to each other and relative to the thermal insulation board **1** are such that after thermal insulation boards **1** of neighboring roof boards are pushed close to each other, the parts of the tar paper extending beyond the board overlap correspondingly with the side of the neighboring insulation roof board **2**. The parts of the protective tar paper layer **2** protruding on both sides overlap with the respective parts of the protective tar paper layer **2** being part of the water proof layer of the neighboring roof board. The parts of the other tar paper layer **3** protruding on two sides overlap respectively with the corresponding parts of the second tar paper layer **3** of the waterproof layer of the neighboring board. The parts of the third tar paper layer **4** overlap with the respective parts of the third tar paper layer **4** of the waterproof layer of the neighboring board. Such design makes it possible to have tight and mechanically durable connection of all the three tar paper layers **2,3,4** and therefore the tight connection of the neighboring insulation roof boards, which eventually makes it possible to have a roofing characterized by very good thermal insulation properties and good tightness. After joining with the neighboring boards, all the tar paper layers **2,3,****4** according to the invention are joined together and the connection surfaces between particular layers are smaller than the contact surfaces of these layers. The connection surface between the insulation tar paper **2** and the thermal insulation board **1** is smaller than the contact surface between there two layers by the section **e** along the longer side and the section **f** along the shorter side. On the other hand the connection surface between the substrate tar paper layer **3** and the protective tar paper layer **2** is smaller than the contact area between these two layers by the section of **a+e+e** along the longer side and the section **b+f+f** along the shorter side, and the connection surface between the surface tar paper layer **4** and the substrate tar paper layer **3** is smaller than the contact surface between the layers by the section **a+n+a+e+e+e** along the longer side and the section **b+n+b+f+f+f** along the shorter side. Thus bands are formed which are the non-contact area between particular layers **1, 2, 3, 4** on part of the edge of the contact surface. Lower surfaces of the non-contact bands for each of tar paper layers **2,3,4** are coated on the bottom with foil **7**, 11' 15 made of meltable plastic. Thanks to this position, parts of the tar paper **2,3,4** extending beyond the thermal insulation board **1** are more flexible and can be bent over a much larger width without any damage to the board or the neighboring boards. Thanks to that is easier to move up the protruding parts of the tar paper **2,3,4**, and therefore it is easier to connect the next tar paper layers **2,3,4** of the neighboring insulation boards according to the invention.

If the module has two tar paper layers **2,3**, the respective position of the thermal insulation board and the first and the second tar paper layer and the distances **a, b, c, d, e, f** are identical to the module with three tar paper layers **2,3,4.**

In another embodiment of the insulation roof board according to the invention, the bottom surface of the thermal insulation board **1** has the form of a system of perpendicular collectors (width **o** and depth **p**) as well as ducts (width **r** and depth **s**, wherein in one insulation board **1** there is a single longitudinal collector and two transversal collectors at the distance **t**. Transversal and longitudinal ducts are connected with the collectors. At the intersection of the transversal collectors and the longitudinal collector there are two spaces having the form of discs used for installation of ventilation chimneys. The insulation roof boards according to the invention are laid on the roof in such a way that one row of the boards is displaced against the neighboring one by the half-length of the board so that the transversal collectors of the neighboring boards overlap with each other.

Longitudinal and transversal ducts of the insulation roof boards intersect forming a network of connections in the areas between the collectors. The longitudinal and transversal collectors intersect thus forming a network of connections between the neighboring roof boards. Thus, a network of connections within a single board and over the entire roof surface is formed. This system is used for removal of steam from the moist roof layers located underneath the insulation roof boards. Steam is usually formed as a result of sun rays heating the roof surface when moisture in the bottom layers of the roof transforms into steam and increases its volume. This phenomenon may lead to the formation of steam bubbles underneath the insulation roof boards or underneath the tar paper layers **2,3,4**. The steam trapped in a confined space is under significant pressure which poses a risk to the entire roofing. Steam pressure may result in buckling of the roof boards or the tar paper layers **2,3,4**. Consequently, the waterproof layer may crack and the entire roofing may be leaking. The system of collectors, ducts and vents enables efficient and continuous removal of steam to the outside. The system functions in such a way that steam accumulated in a given area of the roof is removed through the ducts to the collectors, which facilitate its movement towards the outlet, e.g. the vents, through which it is taken outside.

Such formation of the bottom surface of the thermal insulation board **1** of the insulation board according to the invention makes the entire roof board (in addition to its thermal insulation and waterproof function) be provided with an additional ventilation function.

Insulation roof boards with the ventilation function are used for the renovation of old roofing with moisture entrapped there. Use of such boards is also favorable while making new roofing in bad weather. During precipitation while making the roofing with the use of the insulation roof boards according to the invention it is not necessary to cover the works area. Any possible moisture from the fall is removed by the ventilation system.

In the example method of preparation of the insulation roof board according to the invention, the method for producing the insulation roof boards has been shown for the following total dimensions of the boards: length of 287 cm, width of 92 cm, thickness of 15, in the production line where specific operations are performed subsequently, at separate stations and production is continuous.

In order to produce the insulation roof board according to the invention, a strip of surface tar board **4** is unreeled from the tar paper reel. While unreeling, the tar paper is cut by rotary knives to the required width **d**= 100 cm. Using rotary length meters, while the surface tar paper **4** is unreeled, the length **c** is measured off on the sheet of the tar paper **c**. Then the surface paper **4** is cut crosswise the strip to the length **c** = 299 cm. This is how the surface tar paper **4** sheet is formed. Cutting the tar board **4** to the required width **d** is supposed to ensure the constant band width irrespective of the deviations in dimensions in the crude tar paper itself. The constant width of the tar paper is favorable due to the accuracy of connecting subsequent tar paper layers **2, 3, 4** of the neighboring roof boards in such a way that makes it possible to avoid the undesirable thickening or excessive play between the tar papers after pushing together the thermal insulation layers **1**. The surface tar paper **4** sheet is transported to the station where gas torches **17** are used for preheating the foil **15** forming the bottom coating of the surface tar paper **4**. The foil **15** melts and discloses the bitumen layer **14** underneath. After the melting of the foil **15,** bituminous mass **14** is still heated with gas torches **16** until its surface melts and until sticky adhesive surface is obtained. The melting and removal of the foil **15** and the melting of bituminous mass **14** is only conducted in the area where the surface tar paper **4** is connected with the substrate tar paper **3**.

At a separate station a strip of substrate tar paper **3** is unreeled. While unreeling the tar paper rotary knives cut the tar paper to the required width d = 100 cm. Rotary meters are used while tar paper unreeling for measuring off the required length of the sheet of substrate tar paper **3** c = 299 cm, and then the tar paper is cut crosswise. This is how the sheet of substrate tar paper is formed **3**. The substrate tar paper layer **3** is laid on the preheated sticky bottom surface of the surface tar paper sheet **4** in such a way that the bottom surface of the surface tar paper **4** joins with the upper surface of the substrate tar paper **3** thanks to the adhesive properties of the melted bituminous mass **14**. Tar papers **3** and **4** are connected only on the part of the their contact area. The substrate tar paper **3** sheet is laid onto the surface tar paper **4** sheet in such a way that the displacements of both sheets **3** and **4** relative to each other continue to be **a+n** along the longer side, and **b+n** along the shorter side. Both tar papers layers **3,4** are pressed to each other by pressure rolls **17**.

The joined sheets of tar papers **4** and **3** are transported to the station where a row of gas torches preheat the foil **11** of the substrate tar paper **3**. The foil **11** is melted by the burners **17,** which reveals the bituminous mass **9** lying underneath, which is then still heated with gas torches **17** until the surface melts and the liquid and adhesive surface is obtained. The melting and removal of the foil and the melting of bituminous mass **9** is conducted only in the connection area of the substrate tar paper **3** and the protective tar paper **2.**

The protective tar paper **2** sheet is laid on the bottom surface of the substrate tar paper **3** prepared this way so that the bottom surface of the substrate tar paper **3** is connected with the upper surface of the protective tar paper **2** thanks to adhesive properties of the melted bituminous mass **10**. Tar papers **2** and **3** are only joined in the area making part of their contact area. The sheet of protective tar paper **2** is applied to the sheet of substrate tar paper **3** previously connected with the sheet of surface tar paper **4**, keeping the displacement of the protective tar paper **2** relative to the substrate tar paper **3** by the distance **a+n** = 12,5 cm along the longer side and the distance **b**+**n**= 8.5 cm along the shorter side. The three tar paper layers **2, 3, 4** are pressed against each other using the pressure rolls **18**.

The tar papers sheets **4, 3** and **2** joined together are transported to the station where gas torches **17** preheat the foil making the bottom coating of the tar paper **2**. The foil melts and it disappears, revealing the bituminous layer underneath. The melting and removal of the foil is only conducted in the contact area between the tar paper **2** and the thermal insulation board **1**. In the same station the bottom surface of the protective tar paper **2,** in the area where the foil **7** has been removed, is covered with the hot bituminous adhesive **19** of the softening temperature from 155 to 165 °C. In an option of the method of producing the insulation board according to the invention, the chemically hardened polyurethane is applied (cold)
The adhesive is applied only to the areas where the protective tar paper **2** is connected with the thermal insulation board **1.**

For tar papers with the bottom surface covered with fine grit **8** in the form of fine sand or talc, the aforementioned foil **7** removal operation is omitted.

The bottom surface of the protective tar paper **2** sheet prepared in this way receives the thermal insulation board **1,** which is joined with the bottom surface of the protective tar paper **2** with the adhesive **19**. The protective tar paper **2** and the thermal insulation board **1** are only joined in the area making part of their contact area. Then the thermal insulation board **1** is laid onto the protective tar paper **2** sheet so that the displacements of the thermal insulation board **1** relative to the protective tar paper **2** sheet continue to be **a** along the longer side and **b** along the shorter side. The thermal insulation board **1** is pressed against the protective tar board **2** sheet using the press until they adhere completely.

The operation of melting the foils **7, 11, 15** and bituminous masses **6, 10, 14** in zones is conducted using a set of several gas torches **17** positioned in a row and mounted on a common beam that can move axially and transversally relative to the tar paper sheet. Additionally, it is possible to adjust the flame size in the torches **17**. This adjustment enables fine control of temperature applied to the tar paper sheet, and thus it is possible to melt the foil and bituminous masses precisely in the strictly defined areas. For practical reasons, standard 1 m wide tar papers are used. Prefabricated starting tar papers for the production of the insulation roof boards according to the invention can be taken from the warehouse of semi-finished products. This advantage is in particular important for manufacturers.

The method of producing insulation roof boards according to the invention makes it possible to customize the insulation roof boards. Using the tar papers from the semis warehouse makes it easy to change the types of tar papers used as specific layers in a roof element adapting the properties of the product to the individual customer's needs.

For packaging, the finished insulation roof boards according to the invention are laid with their thermal insulation **1** up and piled, and the subsequent boards are laid with their corners of protruding tar paper layer **2, 3, 4** facing opposite directions alternately, and the corners are aligned with the sides of the thermal insulation **1** layer of the preceding board. The finished roof boards, with their thermal insulation layer up and with the protruding tar paper corners facing the same direction and laying on the same line are transferred by the horizontal roller drive to the rotary table making the rotary and return motion, wherein in each cycle, when a single roof boards is put on the pile, the table moves by half and is lowered by the distance equal to the height of the insulation roof board before the next insulation roof board is put on the table. The first insulation board of each pile is put on the transport layer **20** made of insulation roof board waste generated in production and adapted for being moved up with a forklift truck. To have the compact shape and to ensure durability of the pile, the pile is advantageously wrapped in plastic foil.

## Claims

1. Insulation roof board comprising
a thermal insulation layer (**1**) and a multi-layered waterproof coating, which comprises at least two tar paper layers (**2,3,4,**) extending beyond the outline of the thermal insulation layer (**1**), wherein said thermal-insulation layer (**1**) in the form of a cuboid, wherein the lowest tar paper layer of said at least two tar paper layers (**2, 3**, **4**) is connected and glued, on the upper contact surface of said thermal layer (**1**), and wherein each subsequent tar paper layer (**3**, **4**) is connected and glued on the upper surface of the directly underlying tar paper layer (**2,3**), wherein each subsequent tar paper sheet (**3, 4**) is displaced with respect to the directly underlying tar paper layer (**2,3**) along two perpendicular directions, **2**),
wherein each tar paper layers (**2, 3, 4)** contains a carrying insert (5,9,13) and a bottom surface and a top surface in the form of a bituminous layer (**6,10,14**),
**characterized in that**
the outer top surface of each tar paper layer (**2,3,4**) is finished with a grit (**8**, **12, 16**),
and **in that** two adjacent perpendicular sides of the lowest layer (**2**) are aligned with two side surfaces of the cuboidal thermal insulation layer (**1**), and **in that** each tar paper layer (**2,3,4,**) has along two adjacent sides a strip extending beyond the outline of the thermal insulation board (**1**), which strip from the bottom is covered with a meltable plastic foil (**7**,**11,15)**, so that in the area where the tar paper layers (2, 3, 4) are in contact and overlapping, the tar paper layers (**2,3,4,**) are not connected to each other.

2. Insulation roof board according to claim 1, **characterized in that** the thermal insulation layer (**1**) is made of mineral wool or/and glass wool, for which compression stresses for 10% of compression distortion are in the range from 30 to 60 kPa, and/or polystyrene for which compression stresses for 10% distortion are in the range from 75 to 120 kPa and/or polyiso cyanourane and/or polyurethane foam, where compression stresses for 10% compression distortion range from 100 to 180 kPa.

3. Insulation roof board according to claim 1, **characterized in that** on the bottom outer surface of the thermal insulation layer (**1**) there is a system of linear grooves, which, advantageously, intersect.

4. Insulation roof board according to claim 1 or claim 2, **characterized in that** it has
a protective tar paper layer (**2**) connected directly with the thermal insulation layer (1) containing a carrying insert (**5**) made of glass fiber of a grammage from 50 to 100 g/m² of the insert, covered on both sides with a bituminous mass layer (6), containing a mixture of bitumen of a penetration from 25 to 50 1/10mm at 25 °C and a softening temperature from 80 to 110 °C and a filler, advantageously in the form of limestone powder of a grain size below 1 mm and CaCO₃ content of at least 85 %, bituminous powder of absorbability below 1.5 % m/m, dolomite powder of moisture content below 0.3%, wherein the amount of the filler is equal to or greater than the bitumen content, advantageously in the range from 50-75 % of the total mix, and covered with the meltable plastic foil (**7**) on the bottom, advantageously polyethylene and/or polypropylene, of a density ranging from 0.90 to 0,97 gr/cm³, and from the top is covered with fine grit (**8**) of fine sand of a grain size from 0.5 to 1,0 mm or talc of a grain size below 50 µm, and
- a substrate tar paper layer (**3**) with a carrying insert (**9**) in the form of bituminous fiber sheet of a grammage from 120 to 250 gram per 1 m² or glass fabric of a grammage from 150 to 200 g/m² or glass blanket of a grammage from 100 to 160 g/m² or a combination thereof, and a bituminous mass layer (**10**), with a mixture of bitumen of a penetration at 25 °C in the range from 160 to 220 1/10 mm and a softening temperature from 30 to 50 °C, a modifier in the form of synthetic rubber in the amount from 3 to 12 % as recalculated against bitumen or polypropylene mass in the amount from 6 to 10 % as recalculated to the bitumen and filler mass, advantageously in the form of limestone powder of a grain size below 1 mm and CaCO₃ content of at least 85 %, basalt powder of absorbability below 1.5 % m/m, dolomite powder of moisture content below 0.3 % m/m, advantageously in the range from 55 to 70 % of the total mix or a bituminous mass layer with bitumen mix of a penetration at 25 °C in the range from 25 to 50 1/10mm and a softening temperature from 80 to 110 °C and a filler, advantageously in the form of limestone powder of a grain size below 1 mm and CaCO₃ content of at least 85 % and/or basalt powder of absorbability below 1.5 % m/m or dolomite powder of moisture content below 0.3 % m/m or another filler in the amount equal to or greater than the bitumen amount, advantageously in the rage from 50 to 75 % of the total mix, which from the bottom is secured with **a coating** having the form of meltable plastic foil (**11**), advantageously polyethylene and/or polypropylene of a density from 0.90 to 0.97 gr/cm³, and on the top surface having fine grit on the outer surface of the top surface, said grit having the form of fine sand of a grain size in the range from 0.5 to 1,0 mm or talc of a grain size below 50 µm,
- surface tar paper layer (**4**) with a carrying insert (**13**) in the form of polyester fiber sheet of a grammage from 120 to 300 gram per 1 m² or glass fabric of a grammage from 150 to 200 gram per 1 m² or a combination thereof, a bituminous mass layer (**14**) with bitumen mixture of a penetration at 25 °C from 160 to 220 1/10mm and a softening temperature from 30 to 50 °C, a modifier in the form of synthetic rubber in the amount from 3 to 12 %, or atactic polypropylene in the amount from 6 to 10% and a filler, advantageously in the form of limestone powder of a grain size below 1mm and CaCO₃ content of at least 85 % and/or basalt powder of absorbability below 1.5 % m/m and/or dolomite powder of moisture content below 0.3 % m/m or another filler, wherein the total filler content is from 55 to 70 % of the mix, and from the bottom it is covered with meltable plastic foil (**15**) advantageously polyethylene foil or polypropylene foil, of a density from 0.90 to 0.97 gr/cm³ and from the top it has rough grit basalt and/or chlorite-sericite grit (**16**) of a grain size from 0.5 to 4.0 mm.

5. Insulation roof board according to claim 1 or claim 2 **characterized in that** it has:
- a protective tar paper layer **(2),** with a carrying insert (**5**) of glass blanket of a grammage from 50 to 100 g/m², a bituminous mass layer **(6)** with bitumen of a penetration at 25 °C from 25 to 50 1/10mm and a softening temperature from 80 to 110 °C, a filler, advantageously in the form of limestone powder of a grain size below 1 mm and CaCO₃ content of at least 85 % and/or basalt powder of absorbability below 1.5 % m/m and/or dolomite powder of moisture content below 0.3 % m/m, wherein the filler content is in the range from 50 to 75 % of the total mix, which from the bottom is covered with meltable plastic foil (**7**), advantageously polyethylene and/or polypropylene, of a density from 0.90 to 0.97 gr/cm³, and from the top is covered with fine grit **(8)** of fine sand of a grain size from 0.5 to 1.0 mm or talc of a grain size below 50 µm, and
- a substrate-surface tar paper layer (**3**) with a carrying insert (**9**) in the form of polyester fiber sheet of a grammage from 120 to 300 g/ m² or composite material made of polyester fiber sheet and fibrous glass material, a bituminous mass layer **(10)** with bitumen mixture of a penetration at 25 °C in the range from 160 to 220 1/10mm and a softening temperature from 30 to 50 °C, a modifier in the form of synthetic rubber in the amount from 3 to 12% or atactic polypropylene in the amount from 6 to 10 % and a filler in the amount from 55 to 70 % of the total mix, advantageously in the form of limestone powder of a grain size below 1 mm and CaCO₃ content of at least 85 % and/or basalt powder of absorbability below 1.5 % m/m and/or dolomite powder of moisture content below 0.3 % m/m, which from the bottom is wrapped in a meltable plastic foil layer (**11**), advantageously polyethylene foil, polypropylene foil of a density from 0.90 to 0.97 gr/cm², and from the top is covered with rough grit (**12**) made of ground basalt or chlorite-sericite, advantageously of a grain size from 0.5 to 4.0 mm.

6. Method of producing an insulation roof board according to any of the previous claims comprising the tar paper cutting, adhesive coating, pressing and gluing, **characterized in that** a rectangular sheet is cut out from the surface tar paper (**4**) with its outer top face up, said rectangle having the sides larger than the sides of the cuboidal thermal insulation layer (**1**), and then preheating of the sheet in zones, from the top, over the non-entire width and length until the protective foil melts (**15**) and until the bitumen layer (**14**) obtains adhesive properties on the heated surface, with unaffected strips left on the two perpendicular tangential sides, and then the rectangular sheet of substrate tar (**3**) is applied by pressing until the connection is fixed, said sheet having the sides larger than the sides of the cuboidal insulation layer (**1**), wherein the operations of heating in zones, application and pressing are repeated until the required number of layers is obtained, and the tar paper sheets (**2, 3, 4**) are connected in such a way against the previous one that each subsequent tar paper sheet (**3, 4**) is displaced to the same side in both perpendicular directions against the previous one, wherein a strip is formed along the outer sides of each sheet, where the tangential tar papers (**2, 3, 4**) are not connected, wherein the bottom surface of the final bottom tar paper sheet (**2**) is heated in zones from the top, over the non-entire width and length until the protective foil melts and until the bituminous layer has adhesive properties on the heated surface smaller than the surface of the rectangular thermal insulation layer (**1**), with unaffected strips left on the two perpendicular tangential sides, and then, the protective tar paper surface prepared this way is coated with the adhesive (**19**) and the rectangular thermal insulation layer is put thereon (**1**), aligned with the two tangential perpendicular sides of the protective tar paper (**2**) limiting the adhesive covered area (**19**), and then it is pressed until the fixed connection is obtained.

7. Method according to claim 6, **characterized in that** the bituminous adhesive (**19**) of a softening temperature from 150 to 170 °C or the cold-applied polyurethane adhesive is used.

8. Method according to claim 6, **characterized in that** in case the protective tar paper (**2**) is made of a tar paper sheet with its bottom surface covered with fine grit (**8**) in the form of fine sand or talc, the heating in zones is not conducted before the application of the adhesive (**19**).

9. Method according to claim 6, **characterized in that** the preheating with a series of gas or oil torches (**17**) is used, said torches arranged crosswise relative to the tar paper length, and advantageously, the vertical and horizontal movement of the torches can be controlled, or the preheating is realized by hot air jet blowing.

10. Method according to claim 6 or claim 7 or claim 8 or claim 9, **characterized in that** prefabricated tar papers (**2, 3, 4**) in reels are used, which are transported by the roller line after precutting.

11. Method according to claim **6, characterized in that** it is conducted in a continuous way.

12. Method of packaging insulation roof boards according to claim 1 comprising the piling and foil wrapping of the finished boards **characterized in that** finished insulation roof boards with their thermal insulation layer (**1**) up are piled, with subsequent boards with their corners protruding from the tar paper layer (**2, 3, 4**) arranged alternately in the opposite directions and aligned with the sides of the thermal insulation layer (**1**) of the previous insulation roof board.

13. Method according to claim 12, **characterized in that** finished insulation boards with their thermal insulation layer (**2**) up and with protruding corners of the tar paper layers **(2, 3, 4**) facing the same side and arranged in the same direction are supplied to the turn table **characterized by** rotary and return motion, wherein each cycle of piling a single insulation board, before the next insulation board is laid, involves the rotation of the table by half and the lowering of the table by the distance equal to the height of the insulation roof board.

14. Method according to claim 12 or claim 13, **characterized in that** the first insulation board of the pile is laid on the transport layer (**20**), advantageously made of waste generated during the production of insulation roof boards.

## Patentansprüche

1. Isolierende Dachplatte, bestehend aus einer wärmeisolierenden Schicht und einer mehrlagigen wasserisolierenden Beschichtung, die mindestens zwei über den Umriss der wärmeisolierenden Schicht hinausragende Schichten der Dachpappe enthält, **dadurch gekennzeichnet, dass** sie eine wärmeisolierende Schicht (**1**) in Form eines Quaders hat, auf deren obere Oberfläche mindestens zwei Schichten der Dachpappe aufgeklebt sind (**2, 3, 4**), die auf einem Teil der Oberfläche, wo sie sich berühren, miteinander verbunden sind, wobei jede Schicht der Dachpappe (**2**, **3**, **4**) einen Trageinsatz (**5**, **9**, **13**), eine untere und obere Beschichtung in Form einer Schicht der Bitumenmasse (**6**, **10, 14**) und eine Ausrüstung der Außenfläche der oberen Beschichtung in Form von Streuseln (**8, 12, 16**) enthält, und die Bogen der Dachpappe (**2, 3, 4**) mit der wärmeisolierenden Schicht (**1**) verbunden sind, so dass zwei, zueinander tangentiale, senkrechte Bogenseiten der Schicht der Schutz-Dachpappe (**2**) in Bezug auf die Oberfläche der Seiten der quaderförmigen wärmeisolierenden Schicht (**1**) ausgeglichen sind und jeder weitere aufgebrachte Bogen der Dachpappe (**3**, **4**) in die gleiche Richtung in beiden orthogonalen Richtungen gegenüber dem vorherigen (**2**) verschoben ist, wobei die sich berührenden Bogen der Dachpappe (**2, 3, 4**) so miteinander verbunden sind, dass entlang den Außenseiten eines jeden Bogens sich jeweils ein Streifen befindet, der die wärmeisolierende Platte überlappt (**1**) und von unten mit einer Folie aus einem schmelzbaren Kunststoff (**7, 11, 15**) überzogen ist, in dessen Bereich die sich miteinander berührenden Schichten der Dachpappe (**2**, **3**, **4**) nicht verbunden sind.

2. Isolierende Dachplatte nach Anspruch 1, **dadurch gekennzeichnet, dass** die wärmeisolierende Schicht (**1**) aus Mineralwolle und/oder Glaswolle hergestellt ist, deren Druckspannungen bei einer Druckverformung von 10% im Bereich von 30 bis 60 kPa liegen, und/oder Styropor, dessen Druckspannungen bei einer Druckverformung von 10% im Bereich von 75 bis 120 kPa liegen, und/oder Polyisocyanuratschaumstoff und/oder Polyurethanschaum, deren Druckspannungen bei einer Druckverformung von 10% im Bereich von 100 bis 180 kPa liegen.

3. Isolierende Platte nach Anspruch 1, **dadurch gekennzeichnet, dass** die wärmeisolierende Schicht (**1**) an der unteren Außenfläche ein System von linearen Nuten hat, die sich vorteilhafterweise kreuzen.

4. Isolierende Dachplatte nach Anspruch 1 oder Anspruch 2, **dadurch gekennzeichnet, dass** sie hat:
eine Schicht der Schutz-Dachpappe (**2**), die unmittelbar mit der wärmeisolierenden Schicht (1) verbunden ist, die einen Trageinsatz (**5**) aus einer Glasfasermatte mit einem Flächengewicht von 50 bis 100 g/m² enthält, der auf beiden Seiten jeweils mit einer Schicht der Bitumenmasse (**6**) bedeckt ist, die eine Mischung aus Bitumen mit einer Penetration von 25 bis 50 1/10 mm bei 25 °C und einem Erweichungspunkt von 80 bis 110 °C und einem Füllstoff, vorteilhafterweise in Form eines Feinkalks mit einer Korngröße von weniger als 1 mm und einem Gehalt an CaCO₃ von min. 85%, eines Basaltmehls mit einer Aufnahmefähigkeit von weniger als 1,5% m/m, eines Dolomitmehls mit einem Feuchtigkeitsgehalt von weniger als 0,3% m/m, wobei die Menge an Füllstoff gleich oder größer ist als der Gehalt an Bitumen, vorteilhafterweise innerhalb von 50-75% der gesamten Mischung, enthält, und von unten mit einer Folie (**7**) aus einem schmelzbaren Kunststoff überzogen ist, vorteilhafterweise aus Polyethylen und/oder Polypropylen, mit einer Dichte von 0,90 bis 0,97 gr/cm³, und von oben eine mit feinen Streuseln (**8**) aus feinem Sand mit einer Korngröße von 0,5 bis 1,0 mm oder Talk mit einer Korngröße von weniger als 50 µm bedeckte Oberfläche hat, und - eine Schicht der Grund-Dachpappe (**3**), die einen Trageinsatz (**9**) aus einem Polyester-Vliesstoff mit einem Flächengewicht von 120 bis 250 Gramm pro 1 m² oder einem Glasgewebe mit einem Flächengewicht von 150 bis 200 g/m² oder einer Glasmatte mit einem Flächengewicht von 100 bis 160 g/m² oder einer Kombination dieser Materialien und eine Schicht der Bitumenmasse (**10**), die eine Mischung aus Bitumen mit einer Penetration von 160 bis 220 1/10 mm bei 25 °C und einem Erweichungspunkt von 30 bis 50 °C, einem Modifizierungsmittel in Form eines synthetischen Kautschuks in einer Menge von 3 bis 12% bezogen auf das Gewicht des Bitumens oder eines Polypropylens in einer Menge von 6 bis 10% bezogen auf das Gewicht des Bitumens und einem Füllstoff, vorteilhafterweise in Form eines Feinkalks mit einer Korngröße von weniger als 1 mm und einem Gehalt an CaCO₃ von min. 85%, eines Basaltmehls mit einer Aufnahmefähigkeit von weniger als 1,5% m/m, eines Dolomitmehls mit einem Feuchtigkeitsgehalt von weniger als 0,3% m/m, vorteilhafterweise innerhalb von 55-70% der gesamten Mischung, enthält oder eine Schicht der Bitumenmasse enthält, die eine Mischung aus Bitumen mit einer Penetration von 25 bis 50 1/10 mm bei 25 °C und einem Erweichungspunkt von 80 bis 110 °C und einem Füllstoff, vorteilhafterweise in Form eines Feinkalks mit einer Korngröße von weniger als 1 mm und einem Gehalt an CaCO₃ von min. 85% und oder eines Basaltmehls mit einer Aufnahmefähigkeit von weniger als 1,5% m/m oder eines Dolomitmehls mit einem Feuchtigkeitsgehalt von weniger als 0,3% m/m oder einem anderen Füllstoff, dessen Menge gleich oder größer ist als der Gehalt an Bitumen, vorteilhafterweise innerhalb von 50-75% der gesamten Mischung, enthält, und von unten mit einer Beschichtung in Form einer Folie (**11**) aus einem schmelzbaren Kunststoff, vorteilhafterweise aus Polyethylen und/oder Polypropylen, mit einer Dichte von 0,90 do 0,97 gr/cm³ gesichert ist und an der oberen Oberfläche feine Streuseln an der Außenfläche der oberen Schicht aus feinem Sand mit einer Korngröße von 0,5 bis 1,0 mm oder Talk mit einer Korngröße von weniger als 50 µm hat,
- eine Schicht der Deck-Dachpappe (**4**), die einen Trageinsatz (**13**) aus einem Polyester-Vliesstoff mit einem Flächengewicht von 120 bis 300 Gramm pro 1 m² oder einem Glasgewebe mit einem Flächengewicht von 150 bis 200 g/m² oder einer Kombination dieser Materialien, eine Schicht der Bitumenmasse (**14**), die eine Mischung aus Bitumen mit einer Penetration von 160 bis 220 1/10 mm bei 25 °C und einem Erweichungspunkt von 30 bis 50 °C, einem Modifizierungsmittel in Form eines synthetischen Kautschuks in einer Menge von 3 bis 12% oder eines ataktischen Polypropylens in einer Menge von 6 bis 10% und einem Füllstoff, vorteilhafterweise in Form eines Feinkalks mit einer Korngröße von weniger als 1 mm und einem Gehalt an CaCO₃ von min. 85% und/oder eines Basaltmehls mit einer Aufnahmefähigkeit von weniger als 1,5% m/m und/oder eines Dolomitmehls mit einem Feuchtigkeitsgehalt von weniger als 0,3% m/m, oder einem anderen Füllstoff, wobei der Gesamtgehalt an dem Füllstoff von 55 bis 70% der gesamten Mischung beträgt, enthält, hat und von unten mit einer Folie (**15**) aus einem schmelzbaren Kunststoff, vorteilhafterweise aus einer Polyethylen- oder Polypropylenfolie mit einer Dichte von 0,90 bis 0,97 g/cm³, überzogen ist und von oben grobe Basalt- und/oder Chlorit-Serizit-Streuseln (**16**) mit einer Korngröße von 0,5 bis 4,0 mm hat.

5. Isolierende Dachplatte nach Anspruch 1 oder Anspruch 2, **dadurch gekennzeichnet, dass** sie hat:
- eine Schicht der Schutz-Dachpappe (**2**), die einen Trageinsatz (**5**) aus einer Glasfasermatte mit einem Flächengewicht von 50 bis 100 g/m², eine Schicht der Bitumenmasse (**6**), die Bitumen mit einer Penetration von 25 bis 50 1/10 mm bei 25 °C und einem Erweichungspunkt von 80 bis 110 °C und einen Füllstoff, vorteilhafterweise in Form eines Feinkalks mit einer Korngröße von weniger als 1 mm und einem Gehalt an CaCO₃ von min. 85% und/oder eines Basaltmehls mit einer Aufnahmefähigkeit von weniger als 1,5% m/m und/oder eines Dolomitmehls mit einem Feuchtigkeitsgehalt von weniger als 0,3% m/m, wobei der Gehalt an dem Füllstoff von 50 bis 75% der gesamten Mischung beträgt, enthält, hat und von unten mit einer Folie (**7**) aus einem schmelzbaren Kunststoff, vorteilhafterweise aus Polyethylen und/oder Polypropylen mit einer Dichte von 0,90 bis 0,97 gr/cm³, überzogen ist und von oben eine mit feinen Streuseln (**8**) aus feinem Sand mit einer Korngröße von 0,5 bis 1,0 mm oder Talk mit einer Korngröße von weniger als 50 µm bedeckte Oberfläche hat, und
- eine Schicht der Grund-Deck-Dachpappe (**3**), die einen Trageinsatz (**9**) aus einem Polyester-Vliesstoff mit einem Flächengewicht von 120 bis 300 g/m² oder Kompositwerkstoffen aus Polyester-Vliesstoff und Glasfaserstoffen, eine Schicht der Bitumenmasse (**10**), die eine Mischung aus Bitumen mit einer Penetration von 160 bis 220 1/10 mm bei 25 °C und einem Erweichungspunkt von 30 bis 50 °C, einem Modifizierungsmittel in Form eines synthetischen Kautschuks in einer Menge von 3 bis 12% oder eines ataktischen Polypropylens in einer Menge von 6 bis 10% und einem Füllstoff in einer Menge von 55 bis 70% der gesamten Mischung, vorteilhafterweise in Form eines Feinkalks mit einer Korngröße von weniger als 1 mm und einem Gehalt an CaCO₃ von min. 85% und/oder eines Basaltmehls mit einer Aufnahmefähigkeit von weniger als 1,5% m/m und/oder eines Dolomitmehls mit einem Feuchtigkeitsgehalt von weniger als 0,3% m/m, enthält, hat und von unten mit einer Folie (**11**) aus einem schmelzbaren Kunststoff, vorteilhafterweise aus einer Polyethylenfolie, einer Polypropylenfolie, mit einer Dichte von 0,90 bis 0,97 gr/cm³, überzogen und von oben mit groben Streuseln (**12**) aus zerkleinertem Basalt oder Chlorit-Serizit, vorteilhafterweise mit einer Korngröße von 0,5 bis 4,0 mm, bedeckt ist.

6. Verfahren zur Herstellung der isolierenden Dachplatte, das Schneiden der Dachpappe, Beschichten mit Bindestoff, Drücken und Kleben umfasst, **dadurch gekennzeichnet, dass** ein rechteckiger Bogen, dessen Seiten größer sind als die Seiten der quaderförmigen wärmeisolierenden Schicht (**1**), aus der Deck-Dachpappe (**4**), deren äußere obere Seite nach unten gerichtet ist, ausgeschnitten und zonal von oben in der nicht vollen Breite und Länge erhitzt wird, bis die Schutzfolie (**15**) geschmolzen ist und die Bitumenschicht (**14**) Klebeeigenschaften in dem erhitzten Oberflächenbereich hat, wobei unberührte Streifen auf zwei senkrechten, sich berührenden Seiten gelassen werden, und danach der rechteckige Bogen der Grund-Dachpappe (**3**), dessen Seiten größer sind als die Seiten der quaderförmigen wärmeisolierenden Schicht (**1**), aufgebracht wird, durch Drücken, bis die Verbindung fest ist, wobei das zonale Erhitzen, das Aufbringen und das Drücken so oft wiederholt werden, bis die erforderliche Anzahl von Schichten erreicht ist, und die Bogen der Dachpappe (**2, 3, 4**) miteinander verbunden werden, so dass jeder weitere aufgebrachte Bogen der Dachpappe (**3, 4**) in die gleiche Richtung in beiden orthogonalen Richtungen gegenüber dem vorherigen verschoben ist, wobei entlang den Außenseiten eines jeden Bogens sich jeweils ein Streifen bildet, auf dem die sich miteinander berührenden Dachpappen (**2, 3, 4**) nicht verbunden sind, und die untere Oberfläche des letzten unteren Bogens der Schutz-Dachpappe (**2**) zonal von oben in der nicht vollen Breite und Länge erhitzt wird, bis die Schutzfolie geschmolzen ist und die Bitumenschicht Klebeeigenschaften in dem erhitzten Oberflächenbereich hat, der kleiner ist als die Fläche der rechteckigen wärmeisolierenden Schicht (**1**), wobei unberührte Streifen auf zwei senkrechten, sich berührenden Seiten gelassen werden, und danach der Klebstoff (**19**) auf den so präparierten Oberflächenbereich des Bogens der Schutz-Dachpappe und die rechteckige wärmeisolierende Schicht (**1**) aufgebracht, wobei sie in Bezug auf die zwei sich berührenden senkrechten Seiten des Bogens der Schutz-Dachpappe (**2**), die die mit dem Klebstoff (**19**) bedeckte Fläche einschränken, ausgeglichen wird, und gedrückt werden, bis die Verbindung fest ist.

7. Verfahren nach Anspruch 6, **dadurch gekennzeichnet, dass** der Bitumenklebstoff (**19**) mit einem Erweichungspunkt von 150 bis 170 °C oder der kalt aufzubringende Polyurethan-Klebstoff eingesetzt wird.

8. Verfahren nach Anspruch 6, **dadurch gekennzeichnet, dass** das zonale Erhitzen vor dem Auftragen des Klebstoffes (**19**) nicht durchgeführt wird, wenn als Schutz-Dachpappe (**2**) ein Bogen der Dachpappe mit der unteren Oberfläche aus feinen Streuseln (**8**) aus feinem Sand oder Talk eingesetzt wird.

9. Verfahren nach Anspruch 6, **dadurch gekennzeichnet, dass** das Erhitzen mit einer Reihe von Gas- oder Ölbrennern (**17**), die in einer Linie quer zur Länge des Bogens der Dachpappe angeordnet sind und, vorteilhafterweise, es ermöglichen, die Vertikal- und Horizontalbewegungen zu kontrollieren, oder das Erhitzen mit heißer Blasluft durchgeführt wird.

10. Verfahren nach Anspruch 6 oder Anspruch 7 oder Anspruch 8 oder Anspruch 9, **dadurch gekennzeichnet, dass** die vorgefertigten Dachpappen (**2**, **3**, **4**) in Rollen verwendet und nach dem Zuschneiden auf Rollen transportiert werden.

11. Verfahren nach Anspruch 6, **dadurch gekennzeichnet, dass** es um ein kontinuierliches Verfahren geht.

12. Verfahren zur Verpackung der isolierenden Dachplatten nach Anspruch 1, das Stapeln und Folienumhüllung der fertigen Dachplatten umfasst, **dadurch gekennzeichnet, dass** die fertigen isolierenden Dachplatten, die mit der wärmeisolierenden Schicht (**1**) nach oben gewandt sind, gestapelt werden, wobei die folgenden Platten abwechselnd mit ihren Ecken der hinausragenden Schichten der Dachpappe (**2, 3, 4)** in entgegengesetzte Richtungen gewandt und diese Ecken in Bezug auf die Seiten der wärmeisolierenden Schicht (**1**) der vorherigen isolierenden Dachplatte ausgeglichen werden.

13. Verfahren zur Verpackung nach Anspruch 12, **dadurch gekennzeichnet, dass** die fertigen mit der wärmeisolierenden Schicht (**1**) nach oben gewandten isolierenden Dachplatten und mit den hinausragenden Ecken der hinausragenden Schichten der Dachpappe (**2, 3, 4**), die der gleichen Seite zugewandt und in die gleiche Richtung angeordnet sind, mit dem horizontalen Transport, insbesondere auf Rollen, auf den Drehtisch geliefert werden, der durch horizontale Dreh-Rück-Bewegung und vertikale Linienbewegung gekennzeichnet ist, wobei der Tisch bei jedem Zyklus, in dem eine einzelne isolierende Dachplatte auf den Stapel gelegt wird, eine halbe Umdrehung macht und um eine Strecke abgesenkt wird, die der Höhe der isolierenden Dachplatte entspricht, bevor die nächste isolierende Dachplatte gelegt wird.

14. Verfahren nach Anspruch 12 oder Anspruch 13, **dadurch gekennzeichnet, dass** die erste isolierende Dachplatte des Stapels auf die Transportschicht (**20**), vorteilhafterweise aus Produktionsabfällen nach den isolierenden Dachplatten, gelegt wird.

## Revendications

1. La plaque de toit isolant ayant une couche d'isolation thermique et l'étanchéité de revêtement multicouche, comprenant au moins deux couches de la membrane en saillie au-delà du contour de la couche d'isolation thermique, **caractérisé en ce qu'**il comprend une couche d'isolation thermique (1) sous la forme d'un parallélépipède, dont la surface supérieure est collée au moins deux couches de la membrane (2, 3, 4) reliée à chaque partie de la surface de contact, dans lequel chaque couche de la membrane (2, 3, 4) comprend un support d'insert (5, 9, 13), le revêtement inférieur et la couche de finition sous la forme d'une couche de bitume (6, 10, 14) et la finition de la surface extérieure de la coque supérieure en forme de vermicelles (8, 12, 16), tandis que les feuilles de membrane (2, 3, 4) sont reliées à une couche d'isolation thermique (1), de sorte que les deux tangentes entre elles,équarrisseur feuille de couche membrane de support (2) est orienté vers la zone des côtés d'une couche isolante rectangulaire (1) et chaque couche suivante appliquée à membrane (3, 4) est déplacé dans la même direction dans les deux directions orthogonales par rapport au précédent (2), dans lequel des feuilles de contact de la membrane (2, 3, 4) sont reliés les uns aux autres de telle sorte que le long des côtés extérieurs de chaque feuille est placée au niveau des oscillations de la courroie sur la plaquette isolante (1), recouvert d'une feuille support de matière plastique thermofusible (7, 11, 15) la surface de la couche venant en butée Papanicolaou (2, 3, 4) ne sont pas connectés que le long des côtés extérieurs de chaque feuille est placé à la balançoire de la ceinture sur le panneau isolant (1), recouverts d'une feuille support de matière plastique thermofusible (7, 11, 15) dans la zone du pap aboutement de couche (2, 3, 4) ne sont pas ils sont connectés que le long des côtés extérieurs de chaque feuille est placé à la balançoire de la ceinture sur le panneau isolant (1), recouverts d'une feuille support de matière plastique thermofusible (7, 11, 15) dans la zone aboutement de couche (2, 3, 4) ne sont pas connectés.

2. Plaque isolante sur le toit de la revendication 1, **caractérisé en ce que** la couche d'isolation thermique (1) est réalisée en laine minérale et/ou laine de verre, la contrainte de compression à 10% de déformation à la compression à l'intérieur de la plage de 30 à 60 kPa et/ou le polystyrène, la contrainte de compression à 10 % de déformation à la compression est comprise dans la plage de 75 à 120 kPa, et/ou une mousse de polyisocyanurate et/ou de la mousse de polyuréthane, dans lequel la contrainte de compression à 10% de déformation à la compression à l'intérieur de la plage de 100 à 180 kPa.

3. Panneau isolant selon la revendication 1, **caractérisé en ce que** sur la surface extérieure inférieure de la couche isolante (1) comporte un système de rainures linéaires, de préférence d'intersection.

4. Plaque isolante sur le toit de la revendication 1 ou la revendication 2, **caractérisé en ce qu'**elle comprend: - une couche d'enveloppe à membrane (2), directement reliée à la couche d'isolation thermique (1), qui comprend un rail de support (5) avec un matelas de fibres de verre ayant un grammage de 50 à 100 g / m² couverte sur les deux côtés d'une couche de bitume (6) comprenant un mélange de bitume avec une pénétration de 25 à 50 1/10mm à 25 ° C et un point de fusion de 80 à 110 ° C, et d'une charge, de préférence sous forme de farine de calcaire de granulométrie inférieure à 1 mm et contenant CaCO3 min 85%, de la farine de basalte d'absorption d'eau inférieure à 1,5% m/m, de la farine de dolomite ayant une teneur en humidité inférieure à 0,3% m/m, dans lequel la quantité de la charge est égale ou supérieure à la teneur en bitume, de préférence dans la plage de 50-75% du mélange total, et le fond est recouvert d'un film (7) en matière plastique fusible, de préférence en polyéthylène et / ou polypropylène, ayant une densité dans la plage de 0,90 à 0,97 g / cm3, et a une surface supérieure couverte par un des petits gâteaux à grains fins (8) de sable fin de granulométrie 0,5 à 1,0 mm ou du talc ayant une taille de grain inférieure à 50 microns, et - une couche de sous-couche (3) qui comprend un support d'insert (9) en polyester non tissé pesant 120 à 250 grammes pour 1 m² ou tissu de verre poids 150 à 200 g / m ou un mat de verre pesant 100 à 160 g / m² ou une combinaison de ces matériaux, et une couche de bitume (10) qui comprend un mélange de bitume avec une pénétration à 25 °. C 160-220 1/10 mm et un point de fusion de 30 à ramollissement 50 ° C, le modificateur sous forme de caoutchouc synthétique, en une quantité allant de 3 à 12% par rapport au poids du bitume ou du polypropylène en une quantité allant de 6 à 10% sur la base du poids de bitume et d'une charge, de préférence sous forme de farine de calcaire de granulométrie inférieure à 1 mm et une teneur en CaCO 3 min 85%, le basalte repas d'absorption d'eau inférieure à 1,5% m / m, de la farine de dolomite ayant une teneur en humidité inférieure à 0,3% m / m, de préférence dans la plage de 55 à 70% du mélange ou de bitume, la couche totale, qui comprend un mélange de bitume ayant une pénétrabilité à 25 °. C, entre 25 et 50 1 / 10mm, et un point de fusion de 80 à 110 ° C et une charge de ramollissement de préférence sous la forme de farine de calcaire de granulométrie inférieure à 1 mm et une teneur min CaCO3 85% et / ou de la farine basalte de l'absorption d'eau inférieure à 1,5% m / m ou de la farine de dolomite ayant une teneur en humidité inférieure à 0,3% m / m ou autre matériau de remplissage en une quantité égale ou supérieure à la quantité de bitume, de préférence de 50 à 75% du mélange total et qui est protégée de la couche inférieure du film (11) en matière plastique fusible, de préférence du polyéthylène et/ou polypropylène, ayant une masse volumique comprise dans l'intervalle de 0,90 à 0,97 g/cm3, et la surface supérieure est prévue sur une granulométrie fine extérieure granules sont la surface supérieure de la couche de sable fin de granulométrie 0,5 à 1,0 mm, ou du talc avec une grosseur de grain inférieure à 50 microns,
- Membrane de la couche de finition (4) comportant un porte-tampon (13) en polyester non tissé pesant 120 à 300 grammes par 1 m² ou d'un tissu de verre ayant un poids de base de 150 à 200 g par 1 m² ou une combinaison de ces matériaux, une couche de bitume (14) qui comprend un mélange de bitume avec une pénétration à 25 °. C 160-220 1/10 mm et un point de fusion de 30 à 50 °C, le modificateur sous forme de caoutchouc synthétique, en une quantité allant de 3 à 12% de ramollissement, et de polypropylène atactique une quantité de 6 à 10% et une charge, de préférence sous la forme de farine de calcaire de granulométrie inférieure à 1mm teneur min CaCO3 85% et /ou de basalte repas d'absorption d'eau inférieure à 1,5% m/m et/ou de la farine de dolomite ayant une teneur en humidité inférieure à 0,3% m/m,ou une autre charge, dans lequel la teneur en charge totale est de 55 à 70% du mélange, et le fond est recouvert d'un film (15) en matière plastique fusible, de préférence un film de polyéthylène ou un film de polypropylène dont la masse volumique est dans la gammes 0,90 à 0,97 g/cm3 et une partie supérieure grossière garniture (16) du basalte et/ou de chlorite-péricytes avec une taille de particule comprise entre 0,5 et 4,0 mm.

5. Plaque isolante sur le toit de la revendication 1 ou la revendication 2, **caractérisé en ce que** la membrane possède la couche de recouvrement (2) qui comprend un rail de support (5) avec un mat de verre ayant un poids de base compris entre 50 à 100 g/m², une couche de bitume (6), comprenant du bitume avec une pénétration à 25 °C entre 25 et 50 1 / 10mm, et un point situé dans la plage allant de 80 à 110 ° C, la charge, de préférence sous forme de farine de calcaire de granulométrie inférieure à 1mm teneur min CaCO3 85% et/ou de basalte repas d'absorption d'eau inférieure à 1,5 ramollissement % m/ m et/ou de la farine de dolomite ayant une teneur en humidité inférieure à 0,3% m /m, dans lequel la teneur en charge est comprise dans l'intervalle de 50 à 75% du mélange total, et le fond est recouvert d'un film (7) d'une matière plastique fusible, de préférence du polyéthylène et/ou polypropylène, ayant une masse volumique comprise dans l'intervalle de 0,90 à 0,97 gr/cm3
- une couche de membrane -couche supérieure (3), comprenant un support de cartouche (9) en polyester non tissé pesant 120-300 g/m² du matériau composite non-tissé de polyester et de fibre de verre, une couche de bitume (10), comprenant un mélange de bitume avec une pénétration à 25 deg. C 160-220 1/10 mm et un point de fusion de 30 à 50 ° C, le modificateur sous forme de caoutchouc synthétique, en une quantité allant de 3 à 12% ou de polypropylène atactique, en une quantité allant de 6 à 10% et une charge en une quantité allant de 55 ramollissement à 70% du mélange total, de préférence sous la forme de farine de calcaire de granulométrie inférieure à 1 mm et une teneur minimum de 85% de CaCO et/ou du basalte repas d'absorption d'eau inférieure à 1,5% m/m et/ou de la farine de dolomite ayant une teneur en humidité inférieure à 0,3 % m/m, qui est protégée de la couche de film inférieure (11) en matière plastique fusible,de préférence un film de polyéthylène, film de polypropylène a une masse volumique comprise dans l'intervalle de 0,90 à 0,97 g/cm2, et la partie supérieure est recouverte d'une pâte (12) de basalte particulaire grossière ou chloryto séricite, de préférence avec une granulométrie de 0,5 à 4,0 mm.

6. Procédé de fabrication d'un panneau de toit isolant, comprenant les étapes consistant à découper la membrane, le revêtement d'un liant, le pressage et le collage, **caractérisé en ce que** la membrane de la couche supérieure (4) disposée à l'extérieur du côté supérieur du fond est découpée dans une forme rectangulaire dont les côtés sont plus grands que les côtés d'une couche isolante rectangulaire (1), et chauffe ensuite dans les zones de la partie supérieure de la largeur incomplète et la durée jusqu'à ce que le film de matière fondue (15), la structure et pour fournir une couche de bitume (14) propriétés de l'adhésif sur une partie chauffée de la surface, laissant les deux côtés adjacents perpendiculaires de la bande intacte, et est appliquée, en appuyant sur la liaison permanente feuille rectangulaire sous-couche (3) dont les côtés sont plus grands que les côtés d'une couche isolante rectangulaire (1), le fonctionnement de la zone de chauffage, l'application et le pressage est répété jusqu'à ce que le nombre souhaité de couches et les feuilles de la membrane (2, 3, 4) sont combinés l'un à l'autre de telle sorte que chaque couche successive à membrane (3 appliquée, 4) est déplacé dans la même direction dans les deux directions orthogonales par rapport à la précédente, dans lequel le long des côtés extérieurs de chaque bande de tôle formée qui entrent en contact avec chaque membrane (2, 3, 4) ne sont pas connectées, et la surface inférieure de celle-ci, la feuille inférieure de l'enveloppe de la membrane (2) se réchauffe dans les zones de la partie supérieure de la largeur incomplète et la durée jusqu'à ce que la fusion du film protecteur et pour fournir une des propriétés de la couche de bitume de l'adhésif sur la partie chauffée du surface inférieure à la surface d'une couche isolante rectangulaire de surface (1), laissant les deux côtés adjacents perpendiculaires de la bande intacte, puis la partie ainsi préparée de l'adhésif de support de la membrane en feuille est appliquée (19), et impose une couche rectangulaire isolante (1), en l'alignant deux faces contiguës de la feuille perpendiculairement à la membrane de support (2), les surfaces revêtues d'un adhésif (19) limitant et presse pour obtenir une connexion stable.

7. Procédé selon la revendication 6, **caractérisé en ce que** l'adhésif (19) du bitume ayant un point de ramollissement de 150 à 170 °C, ou d'un adhésif de polyuréthane appliqué à froid.

8. Procédé selon la revendication 6, **caractérisé en ce que**, dans le cas où on utilise la membrane comme une coque (2) de la membrane de la surface inférieure faite de nappage à grains fins (8) du sable ou du talc en poudre fine avant d'appliquer l'adhésif (19), la feuille applique aucune zone de chauffage.

9. Procédé selon la revendication 6, **caractérisé en ce que** l'échauffement est une série d'anneaux (17) ou au gaz disposés en une ligne transversale à la longueur de la feuille et la membrane, de préférence avec la possibilité d'un mouvement contrôlé et le chauffage à la verticale ou soufflage d'air chaud.

10. Procédé selon la revendication 6 ou la revendication 7 ou la revendication. 8 ou la revendication. 9, **caractérisé en ce que** la membrane utilisée (2, 3, 4), le démarrage roulé en rouleaux, qui sont transportés après la coupe du rouleau de transport.

11. Procédé selon la revendication 6, **caractérisé en ce qu'**il est réalisé en continu.

12. Méthode d'emballage isolé toit de la revendication 1, comprenant l'empilage des panneaux finis dans la pile et la feuille environnante, **caractérisé en ce que** les plaques isolantes de recouvrement finis sont retournés à la couche d'isolation thermique (1) vers le haut empilée, en plus des plaques alternativement les coins des couches en saillie de la membrane (2, 3, 4) à l'opposé pages et en alignant les angles sur les côtés de la couche isolante (1) du panneau de toit isolant précédent.

13. Procédé selon la revendication emballage 12, **caractérisé en ce que** le fini de panneaux de toit isolant, faisant face à la couche d'isolation thermique (1), jusqu'à et dépassant les coins des couches en saillie de la membrane (2, 3, 4) dans le même sens dans les mêmes fils dans la direction le transport à l'horizontale, en particulier un rouleau, la rotation mouvement de la table effectuant rotatif retour mouvement horizontal et linéaire verticalement, à chaque cycle, qui est placé sur la pile créé une plaque de toit isolant avant d'appliquer la table de panneau de toit suivant isolant effectue un demi-tour et abaissé par une distance égale à la hauteur de l'isolation plaque de toit.

14. Procédé selon la revendication 12 ou la revendication 13, **caractérisé en ce que** la première pile de plaque isolante est placée sur une voie de transport (20), de préférence faite des déchets de toiture isolée.
